# EUROPEAN PATENT APPLICATION

(11) **EP 0 571 034 A1**
(43) Date of publication of application: **24.11.1993**
(21) Application number: 93201396.4
(22) Date of filing: 15.05.1993
(51) Int. Cl.: G01N 35/02, B01F 11/00

(54) **Mixing mechanism for analyzers**

(30) Priority: 22.05.1992 US 887990; 22.03.1993 US 34040
(71) Applicant: Johnson & Johnson Clinical Diagnostics, Inc., Rochester New York 14650 (US)
(72) Inventor: Jukubowicz, Raymond Francis, Rochester, New York 14650-2201 (US); Porte, Johannes Jacobus, Rochester, New York 14650-2201 (US)
(74) Representative: Mercer, Christopher Paul

(57) **Abstract**

In clinical analyzers, it is often necessary to mix liquids to a sample in a cuvette. Known mixing mechanisms do not provide satisfactory mixing of the liquids and some liquid loss is also experienced when using such mechanisms. Described herein in an improved mixing mechanism for mixing liquids and samples in a cuvette (C). The mechanism comprises a set of protrusions (160) which project into the path of the cuvette (C) as it passes through the incubator of a clinical analyzer. The protrusions (160) can be fixed or driven, and project upwardly or sideways into the path of the moving cuvette (C).

## Description

This invention relates to an analyzer for assaying analytes in a liquid sample, and is more particularly concerned with wet assays which require liquid mixing of sample and reagent.

In clinical analyzers which do wet assays, it is well known to mount the reaction cuvettes on a rotating platform which carries them from station to station, at least one of those stations being one which causes mixing within the cuvette. Such an example is described in German OLS 3 839 080, in which cuvettes are apparently vibrated to cause mixing of the reaction cuvettes, by a mechanism described as providing a "high rate (frequency) and low amplitude" for a few seconds. It is not clear what those relative terms might mean.

Such a disclosure is inadequate to teach a satisfactory mixing mechanism. It appears that the entire reaction table is vibrated or shaken to effect the desired mixing. Yet, that table is a fairly massive plate, so that large amounts of energy are required to vibrate the entire plate at some "high" frequency. This large amount of energy is undesired, and isolation of the table is required so that this vibration is not transferred to the rest of the analyzer.

Still further, there is no indication of what high frequencies and low amplitudes are useful. Finally, when adding certain liquids to another liquid, it can be easily shown that merely shaking the cuvette "for a few seconds" is not likely to cause adequate mixing. There is a particular need to provide adequate mixing when adding a diluent to a liquid sample, such as is often done to allow the assay of an out-lier which has a concentration so high as to be otherwise out-of-range.

Other teachings in the art concerning the mixing of liquid within liquid refer to shaking by oscillating the cuvette forward and backward, to cause as it were a "sloshing" of the liquid. Such a system is used in, for example, the "Amerlite" analyzer. This also is of limited utility, since vigorous sloshing, while causing desired mixing, also causes a loss of liquid from the cuvettes. Gentle sloshing, while effective to retain the liquid in the cuvette, is slow to cause mixing, that is, 60 minutes or more may be required to mix by sloshing gently.

It is therefore an object of the present invention to provide a wet assay analyzer in which rapid mixing of liquid within liquid can be achieved, without liquid sloshing out of the open cuvettes. In particular, an improved mixing apparatus for an analyzer has been provided.

More specifically, in accordance with one aspect of the present invention, there is provided an analyzer for conducting a wet assay in a liquid in a cuvette, the analyzer comprising:-
first station means for adding a liquid reagent to a liquid in a cuvette,
second station means for mixing the reagent with the liquid already within the cuvette, and
station-to-station moving means for moving cuvettes from station to station along a path;
characterized in that the second station means comprises at least one set of spaced-apart protrusions projecting out into the path traced by the cuvettes,
and in that the station-to-station moving means provides relative motion between the protrusions and each cuvette so that the cuvette is repeatedly disturbed by the protrusions to mix the liquid contents.

Accordingly, it is an advantageous feature of the invention that an analyzer is provided with an improved mixer which mixes two liquids in a cuvette more rapidly than was previously possible by such mixers.

It is a related advantageous feature that such mixing occurs without large expenditure of energy required, for example, to vibrate the entire cuvette support.

For a better understanding of the present invention, reference will now be made, by way of example only, to the accompanying drawings in which:-
Figure 1 is a schematic, broken away plan view of an analyzer incorporating the mixing feature according to the present invention in the incubator portion;
Figure 2 is a schematic isometric view of the incubator per se and some processing stations associated therewith;
Figure 3 is a fragmentary plan view of the incubator shown in Figure 2 with the cover removed;
Figure 4 is a fragmentary isometric view similar to that shown in Figure 2, showing details of a segment of the incubator;
Figure 5 is a fragmentary plan view of the outer ring of the incubator, showing one quadrant which repeats itself around the circumference of the ring;
Figure 6 is a sectioned view taken generally along the line VI-VI of Figure 5, showing the associated fixed frame over which a cuvette (shown in phantom) is carried;
Figure 7 is a sectioned view taken along the line VII-VII of Figure 5, showing the associated fixed frame over which a cuvette is carried;
Figure 8 is a fragmentary plan view of one quadrant of the inner ring, which quadrant repeats itself around the circumference of the ring;
Figure 9 is a plan view of a preferred form of the fixed track which provides the mixing mechanism according to the present invention;
Figure 10 is a sectioned view taken generally along the line X-X of Figure 8;
Figure 11 is a sectioned view taken generally along the line XI-XI of Figure 9;
Figure 12 is a sectioned view taken generally along the line XII-XII of Figure 9 and illustrating one embodiment of the protrusions;
Figure 13 is a fragmentary plan view of a shuttle useful with the present invention;
Figures 14 to 16 are fragmentary elevational views in section, showing the shuttle mechanism as it moves the cuvettes from one ring to another and then out of the incubator;
Figure 17 is a sectioned, fragmentary elevational view of the cover of the incubator and access to the incubator for the processing stations;
Figures 18A and 18B are timing diagrams showing representative timing of the operations provided by the incubator according to the present invention;
Figures 19 and 20 are sectioned views similar to that shown in Figure 12, but illustrating a second and third embodiment of the protrusions;
Figure 21 is a fragmentary plan view of the stationary track, illustrating a fourth embodiment of the protrusions;
Figure 22 is a sectioned view similar to that shown in Figure 19, but illustrating a fifth embodiment of the protrusions;
Figure 23 is a sectioned view similar to that shown in Figure 11, but a sixth embodiment of the protrusions;
Figures 24 and 25 are fragmentary sectioned elevational views of a seventh and eighth embodiment of the mixing means according to the present invention; and
Figure 26 is a sectioned view taken generally along the line XXVI-XXVI of Figure 25.

The invention is described by reference to preferred embodiments, wherein wet assay cuvettes are supported in one or more annular supports in an analyzer, which cooperate with each other to cause at least one reaction between a reagent and a sample analyte. In addition, the invention is useful whether the supports are annular or linear, or are plural in number or not, and it is useful also for any mixing, whether or not a sample analyte is to be detected.

As used herein, "complete mixing" means, when the contents to be mixed are of different colors and are scanned by the operator after mixing, that the color is uniform and no color differentiation can be seen in the entire volume that would indicate incomplete mixing. Complete mixing is particularly important when a diluent is being added to the sample.

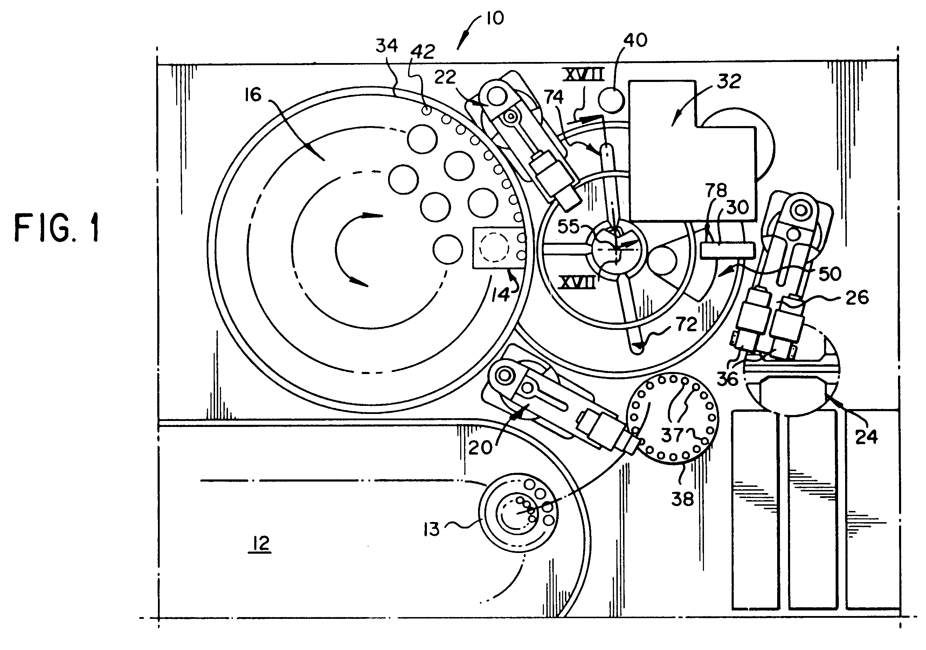

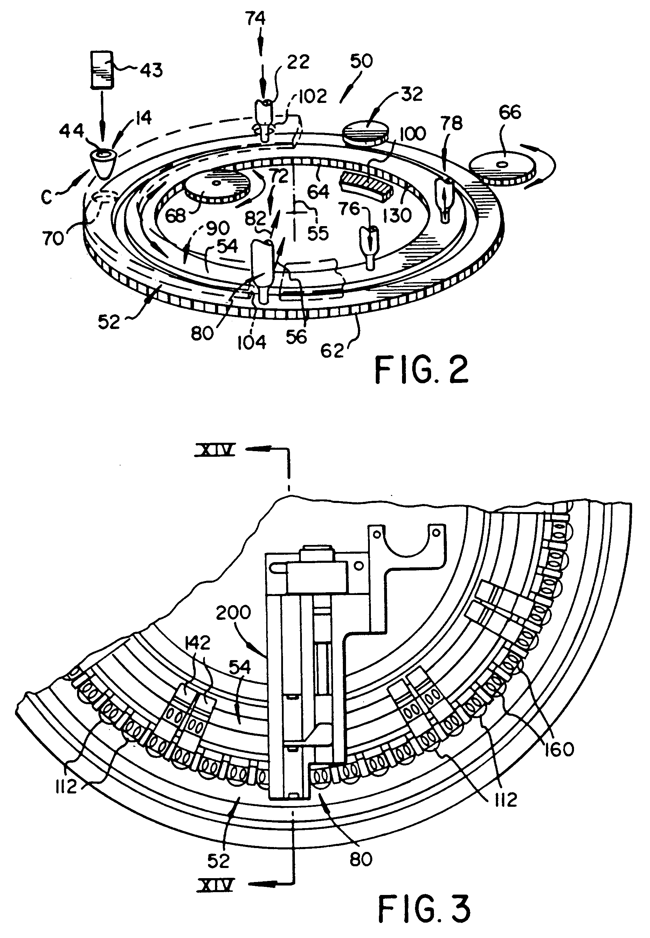

As shown in Figure 1, the mixer of the invention is constructed for use in an incubator 50 in an analyzer 10 comprising a sample supply station 12, a cuvette supply station 14, Figure 2, a reagent supply station 16, Figure 1, means 20 and 22 for transferring sample and reagent to a cuvette disposed in an outer ring of incubator 50, signal reagent supply station 24, means 26 for transferring signal reagent to the cuvette in an inner ring of incubator 50, cuvette wash station 30, and luminometer 32. Except for the incubator and the location of the stations for reagent addition described hereinafter, any suitable construction, including conventional devices, can be used for the sample supply station 12, cuvette supply station 14, reagent supply station 16, transfer means 20, 22 and 26, signal reagent supply station 24, wash dispenser 30, and luminometer 32. For example, the following features are considered to be conventional: supply station 12 includes a position having a device 13 therein which is aligned for sample transfer. Supply station 16 includes a rotor 34, transfer means 20, 22 and 26 are all preferably pivoting aspirators, the aspirator at transfer means 26 having dual probes 36. Transfer means 20 preferably uses disposable tips, which can be presented for pick-up on supply station 12. Additional tips 37 can be presented on turntable 38 for use by means 20 during a dilution step. On the other hand, the aspirator for transfer means 22 preferably uses a more permanent dispensing tip, which uses a wash station 40 as is conventional.

Cuvettes can be positioned for dispensing at station 14 by mounting them in, for example, a ring 42 which moves with rotor 16, any suitable pusher 43, Figure 2, being used to displace a cuvette from ring 42 into incubator 50 below.

Although any cuvette can be used, preferably it is a cup-like container "C", having on its inside wall surface 44 an antibody pre-attached to the wall surface. The antibody is useful in, for example, a conventional sandwich assay which produces a complex of antibody-antigen-labeled antibody for generating a chemiluminescent signal.

A preferred incubator 50 for use of the invention comprises, Figure 2, two concentrically mounted support rings 52, 54 for receiving and carrying cuvettes C (delivered preferably first to ring 52 by any pusher means 43), rotating means for independently rotating rings 52 and 54 about a common axis 55, moving means 200 (Figure 3) discussed hereinafter, for moving a cuvette, in the direction of arrow 56 in Figure 2, from ring 52 to ring 54, processing stations around the rings, and heating means to incubate the contents of the cuvettes on rings 52 and 54. Rings 52 and 54 are shown only schematically in Figure 2 in association with the related components. Rotating means for the rings preferably comprise gear teeth 62, 64 disposed on each of rings 52 and 54, respectively, to be driven by pinion gears 66 and 68.

As noted above, various processing stations are disposed around the circumference of rings 52 and 54, in addition to an entrance port 70 for cuvettes C. They are as follows, Figures 1 and 2: Station 72 is permanently disposed above ring 52 and is the place where the dispensing tip 37 of aspirator 20 (not shown in Figure 2) descends to dispense sample into a cuvette in ring 52. First reagent addition station 74 is permanently disposed at least above ring 52 so that the permanent tip of aspirator 22 can dispense at least a first reagent into a cuvette in ring 52. Optionally, aspirator 22 can also be used to dispense a second reagent, namely a conjugate reagent, as well. Second reagent addition station 76, here for signal reagent, is disposed permanently above at least inner ring 54, to descend to dispense signal reagent into a cuvette in ring 54. Wash dispensing station 78 is disposed permanently above ring 54 for washing cuvettes using wash dispenser 30. Luminometer 32 is permanently disposed above ring 54 for reading chemiluminescence. Finally, transfer means 200 (Figures 3 and 14 to 16) is disposed at station 80 to transfer cuvettes from ring 52 to ring 54, as shown by arrow 56 in Figure 2, and then from ring 54 to a dump, arrow 82, or back to ring 52 temporarily. Although not shown, reagent addition stations 74 and 76 can be constructed to bridge both rings, if desired, so as to allow the respective transfer means to supply reagent to both rings, albeit in separate sequences.

The temperature control for rings 52 and 54 comprise any conventional heating mechanism, such as heater elements (not shown) disposed in a cover plate 90, shown in phantom, and in stationary support tracks, for example, track 100 disposed below both the rings, described hereinafter. Cover plate 90 is apertured at the processing stations, such as entrance port 70, an access port 102 for station 74, and the others not shown in the rest of the cover plate needed for stations 76, 78 and luminometer 32. Additionally, cover plate 90 is removed at groove 104 at station 80 to accommodate transfer means 200, shown hereinafter.

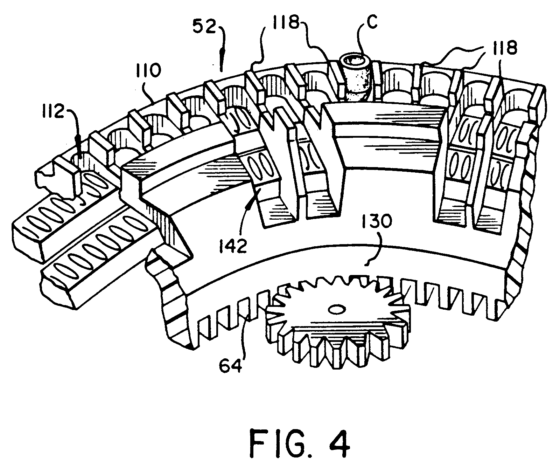

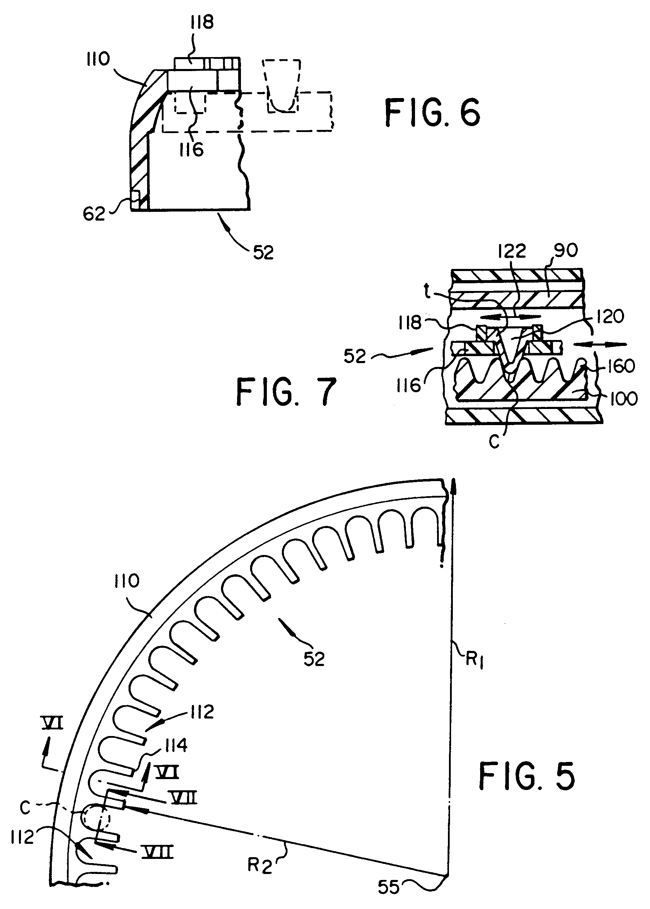

Outer ring 52, Figures 3 to 6, preferably comprises an annulus defined principally by a continuous outer shoulder 110, Figures 4 to 6, having an outside radius R₁ extending from axis 55, Figure 5. To define slots 112 for each cuvette, notches are formed in the annulus from the inside surface 114 of the annulus having an inside radius of curvature R₂. The notches are open towards axis 55, so that a cuvette C (shown in phantom in Figure 5) can be moved from outer ring 52 to the inner ring and back if necessary. Between each notch 112 there is a spoke fragment 116 shaped to support a cuvette C on top of ring 52, Figure 7. Although spokes 116 can have a variety of cross-sectional shapes, preferred is one which is an upside-down T such that the top portion "t" of cuvette C is held between fixed shoulders 118 to prevent pivoting about point 120 in the direction shown by arrow 122. (The support of the cuvette is best shown in Figure 7.) Shoulders 118 are particularly useful if track 100 is provided with optional ribs 160, as shown, as shoulders 118 then reduce the rocking motion 122 which would otherwise be induced.

As shown in Figure 6, gear teeth 62 preferably depend from the bottom portion of ring 52.

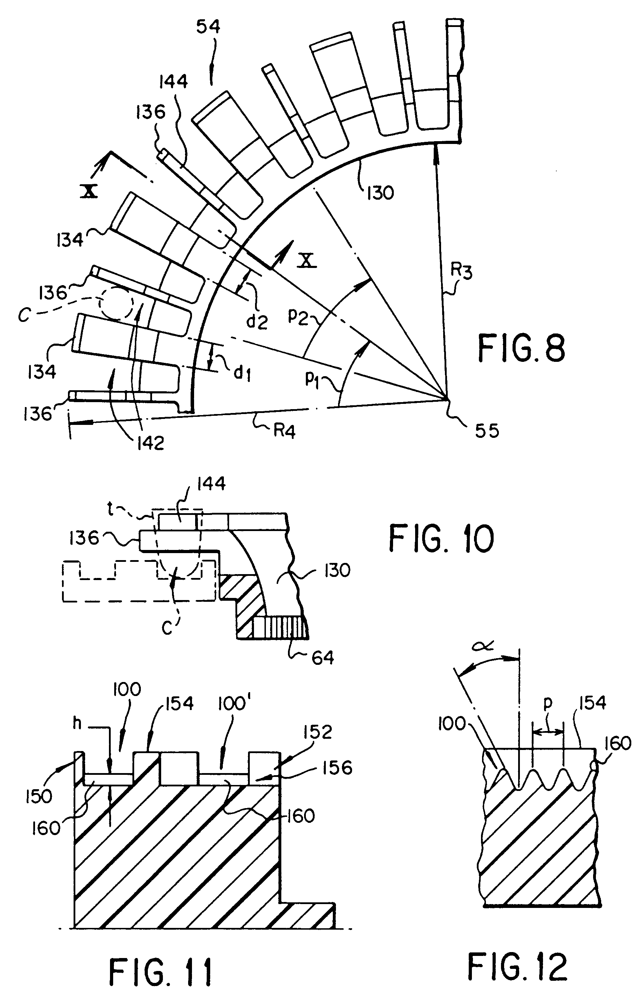

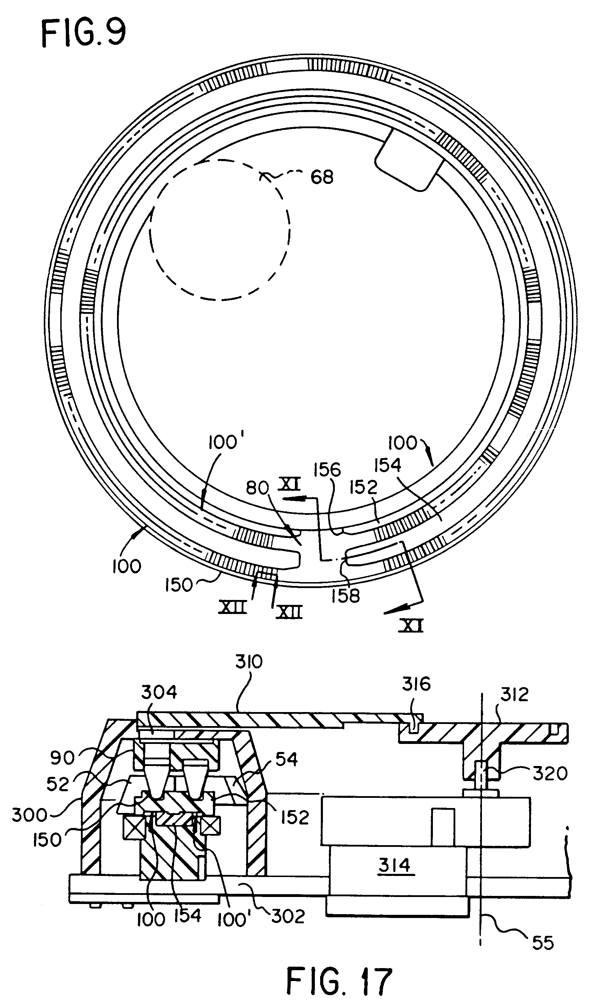

Inner ring 54 comprises, Figures 4, 8 and 9, a base annulus 130 extending completely around the circumference and having an inside radius of curvature R₃ measured from axis 55, Figure 8. Mounted preferably on the inside portion of annulus 130 is a skirt with gear teeth 64, Figure 4. Extending upward and outwardly away from annulus 130 at spaced intervals, with an outside radius R₄, Figure 8, are wide flanges 134 and narrow flanges 136, spaced apart to define notches 142, each shaped to receive and carry a cuvette C (shown in phantom). Most preferably, notches 142 are in pairs with a narrow flange 136 dividing up each pair. The pitch P₁ between each of every other pair is controlled to match the angular spacing around the circumference of stations 76, 78 and 32. Pitch P₂ for the intermediate set of pairs equals pitch P₁, but the spacing d₁ and d₂ which positions each pair from its adjacent pair need not be equal.

Each flange 134 and 136 is shaped in cross-section as an upside down "T", similar to the spokes 116 of ring 52, Figure 7, to provide a shoulder 144 to support upper portion "t" of the cuvette (in phantom).

Importantly, notches 142, Figure 4, differ from notches 112 of ring 52 in that they are open in both directions, away and towards axis 55, Figures 4 and 8. This is needed to allow a cuvette to be moved into ring 54 from ring 52, and then into the dump, in the direction of arrow 82 in Figure 2, which is inside annulus 130.

Each of rings 52 and 54 includes flag means (not shown) which allow either a "home" position, or each cuvette position, to be sensed by a conventional sensor.

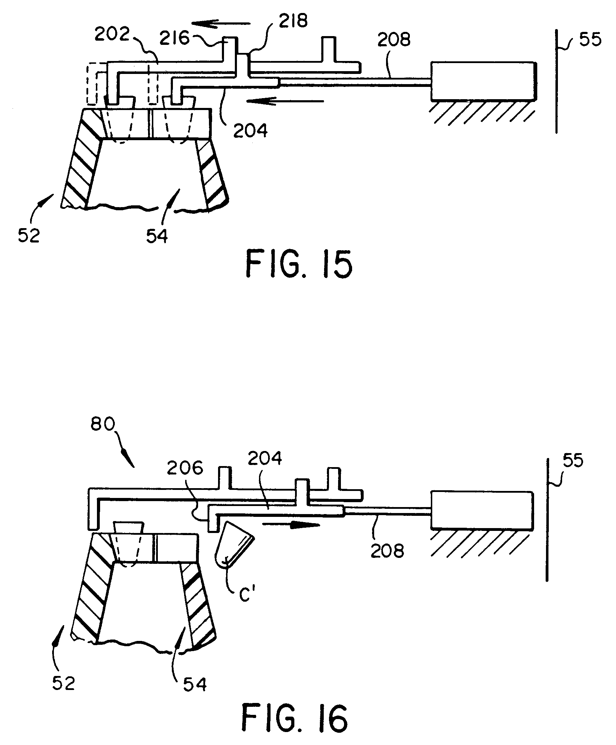

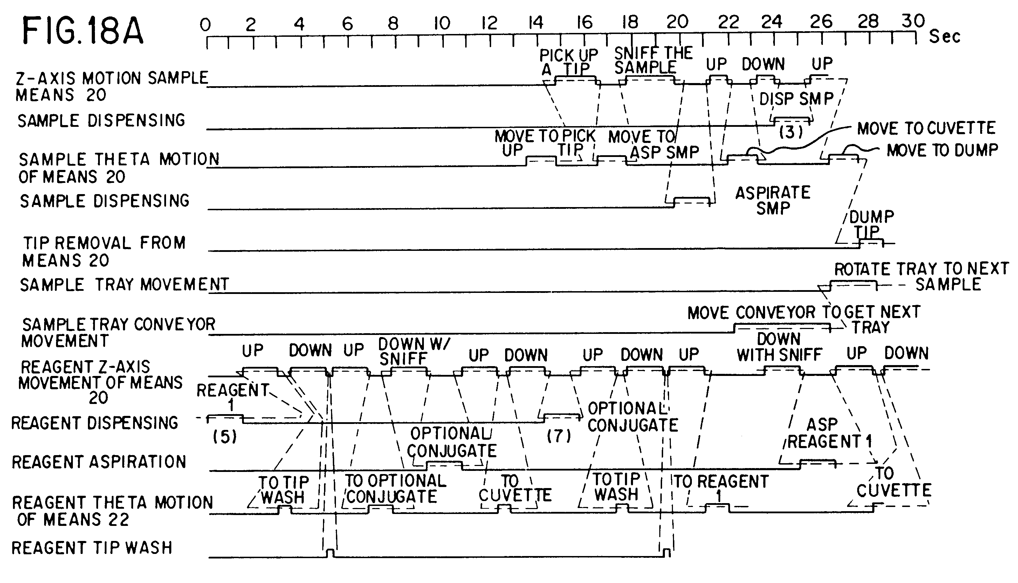

In accordance with the invention, mixing is preferably achieved via the surfaces which contact cuvettes "C". Included are stationary tracks 100, 100', Figures 11 and 12, which can have a variety of surface configurations. If cuvettes C are agitated while on rings 52 and 54 by some other surface-contact mechanism, then the top surface of tracks 100 can be smooth, except for rails 150, 152 and 154, described hereinafter. Preferably, however, the top surface of each track is provided with ribs 160, to cause cuvettes C to be agitated. More specifically, Figures 9 and 17, tracks 100 and 100' are provided with an outside guide rail 150 that runs along outside of the path of cuvettes C carried by ring 52, Figure 17. Track 100' is provided with an inside guide rail 152 that runs along inside of the path of cuvettes C' carried by ring 54, and a guide rail 154 is disposed between the aforesaid two tracks and hence between rings 52 and 54. Rails 150, 152 and 154 serve to retain the cuvettes from being inadvertently displaced sideways, towards or away from axis 55. However, Figure 10, only guide rail 150 extends completely around the circumference of track 100. Guide rail 152 is continuous except for notch 156 at station 80, so that cuvettes C', Figure 16, can be dumped from ring 54. Guide rail 154 is the same as rail 152 - it is continuous except for a notch 158 at station 80, to allow transfer of cuvettes from ring 52 to ring 54.

As noted above, tracks 100 and 100' between paired rails 150, 152, and 154 can be smooth, but are preferably provided with ribs 160, as are more clearly shown in Figures 11 and 12. The pitch "p" and height "h" are adjusted to give agitation to the contents of cuvettes C and C' to cause mixing but without spilling liquid from the cuvettes. The values of p and h depend on the rate of mixing which is desired, as well as the speed of transit over the ribs and the height of the cuvette. Further, pitch p can be different for each track, if the transit speed is different. As an example, for a rotation of between 10rpm to 14rpm, and a cuvette height of 12mm, "h" can vary between 0.6mm and 3.0mm, and "p" can vary between 1mm and 5.0mm, and preferably provide a spacing that achieves a frequency of bumping which is between 20 and 165 bumps/s, with angle α, Figure 12, being between 40° and 50°. Because of restraining shoulders 118 and 144, Figures 7 and 8, the cuvettes are induced to "bump" over the ribs, within the confines of cover plate 90, Figure 7, that is, cover 90 assists in preventing the cuvettes from rising too far out of their notches.

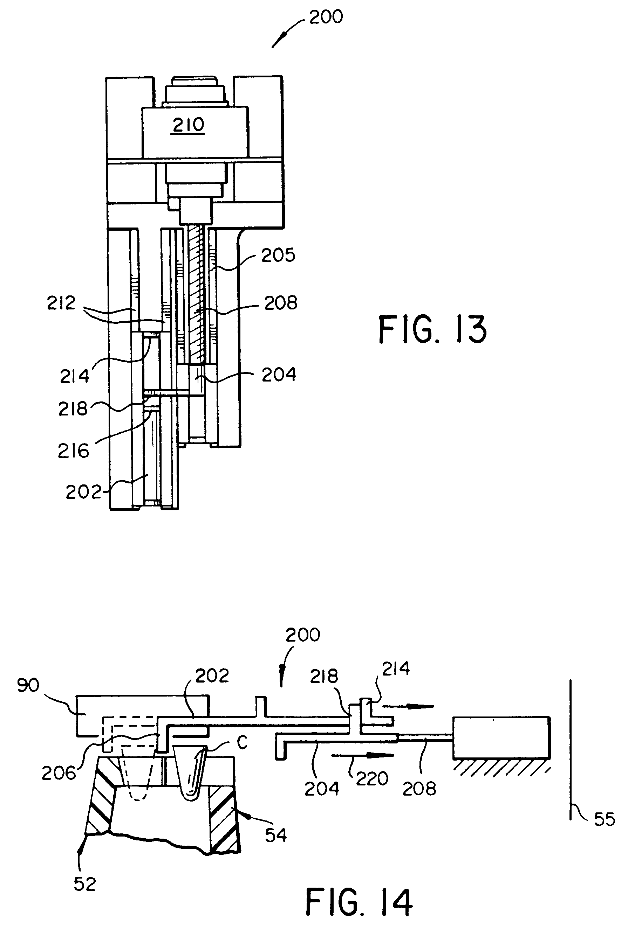

Means are preferably provided for moving cuvettes from ring 52 to ring 54, and then off ring 54 out to dump. To that end, at station 80 there is provided transfer means 200, Figures 13 to 16. Such means comprise preferably a push rod 202, 204 for each of the outer and inner rings 52 and 54, respectively, mounted for transverse, reciprocal movement above their respective rings. Each rod has a terminal lip 206, Figures 14 to 16, which depends down far enough to engage any cuvette which is aligned therewith when the rod is pulled towards axis 55. To reciprocate each rod, a drive can be provided for each. Preferably, however, only rod 204 is driven (along tracks 205, Figure 13), by reason of the rod being internally threaded to engage a lead screw 208 driven by stepper motor 210. Rod 202, on the other hand, is a follower rod which is slidably and freely mounted on track 212, with tabs 214 and 216 rising therefrom, Figures 14 to 16, to be engaged by a collar 218 on rod 204 which encircles rod 202.

The operation of transfer means 200 will be readily apparent from the preceding. As shown in Figures 14 to 16, when a cuvette shown in phantom needs to be transferred at station 80 from ring 52 to ring 54, push rod 204 is drawn back, in the direction of arrow 220, by lead screw 208, until collar 218 engages tab 214. This causes rod 202 to also traverse towards axis 55, from its phantom position, causing lip 206 thereof to move cuvette C to its solid position on ring 54. The next part of the cycle of movement, Figure 15, is to move both rods to the outside of their respective rings, and this is done by advancing lead screw 208 and rod 204 away from axis 55 until collar 218 presses against tab 216 and pushes out rod 202 as well, from its solid position to that shown in phantom (between spaces occupied by cuvettes).

The last part of the cycle of movement is that used to transfer a cuvette C' from ring 54 to dump, Figure 16, at station 80. Lead screw 208 simply withdraws enough to cause lip 206 of rod 204 to pull cuvette C' off ring 54.

It will be understood that one of the notches 142 is maintained empty of cuvettes to provide clearance for movement of lip 206 between rings.

Alternatively, in some assays the cuvette is transferred back to outer ring 52 for further reagent addition and incubation, before returning to ring 54 for washing and reading.

In addition to heated cover 90 and stationary tracks 100, 100', additional insulative enclosures are preferably provided, Figure 17, to retain the heat for incubation by incubator 50. That is, a housing 300 is mounted on a base 302 of an insulative material, with suitable apertures 304 positioned for access to the incubator. Those apertures are generally aligned with the apertures of cover 90, Figure 2. Most preferably, apertures 304 are removably covered by doors 310, which can be operated by any suitable means, such as a cam 312 driven by motor 314 to engage cam followers 316 on the doors, as is more fully described and claimed in commonly owned European patent application no. corresponding to US patent application serial no. 887976 filed on 22 May 1992. Most preferably, drive shaft 320 of motor 314 is on axis 55, Figure 17.

The actual control of the temperature within incubator 50 is variable, depending on the reactions desired. Most preferably, the temperature of outer ring 52 is preferably kept within 0.5°C of the desired temperature, for example, of 37°, as most of the incubation occurs while on this ring. Inner ring 54, on the other hand, can be within 2°C of the desired target temperature, but most preferably ± 0.5°C.

The timing sequence for the operation of the incubator will of course depend upon a large variety of factors, including a) the angular position of each processing station about the rings of the incubator, and b) the chemistry of the immunoassays in question, as will be readily apparent.

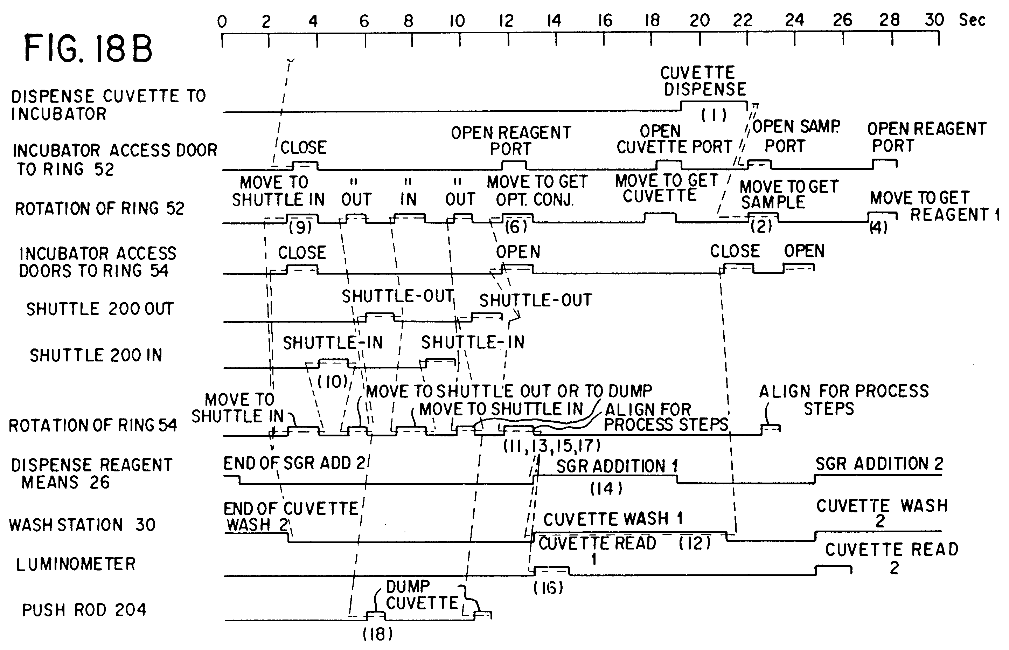

A representative timing diagram is given in Figure 18A and B. In this diagram, it is assumed that reagent transfer means 22 goes to reagent supply station 16, Figure 1, twice for two different reagents. The first 15 functions are defined as operations pertaining to outer ring 52, whereas the remainder are for inner ring 54.

Considering the overall operation of the incubator, it proceeds as follows, under the control of conventional computing means (not shown). ("Step" numerals appear in parentheses in Figures 18A and B, and "SGR" is an abbreviation for "signal reagent".)
Step 1: a cuvette C is dropped into a notch in outer ring 52.
Step 2: ring 52 is rotated to move that cuvette into position at station 72 (Figure 2) to receive a sample liquid.
Step 3: sample is dispensed at station 72.
Step 4: ring 52 is rotated to move the cuvette to reagent addition station 74 (Figure 2).
Step 5: reagent is dispensed at station 74 using transfer means 22.
Step 5': rotate ring 52 to allow other operations on other cuvettes, while incubating and agitating this cuvette.
Step 6: rotate ring 52 to move it back to station 74 for optional conjugate reagent addition.
Step 7: dispense second reagent, if needed.
Step 8: (not labeled on Figure 18): incubate and agitate for a minimum of 15 minutes.
Step 9: rotate ring 52 (and ring 54) to place cuvette at station 80.
Step 10: activate transfer means 200 to move cuvette from ring 52 to ring 54.
Step 11: align cuvette on ring 54 at station 78 for washing of the cuvette.
Step 12: wash cuvette at station 78.
Step 13: repeat alignment step 11 until cuvette is at station 76.
Step 14: dispense signal reagent at station 76.
Step 15: repeat alignment step 11 until cuvette is at read station 32.
Step 16: read cuvette with the luminometer.
Step 17: repeat step 11 until cuvette is at station 80.
Step 18: activate push rod 204 to dump the cuvette.

In the aforedescribed sequence, ribs 160 are included in the portion of track 100 which is to be used for mixing, for example, of a diluent added to a sample.

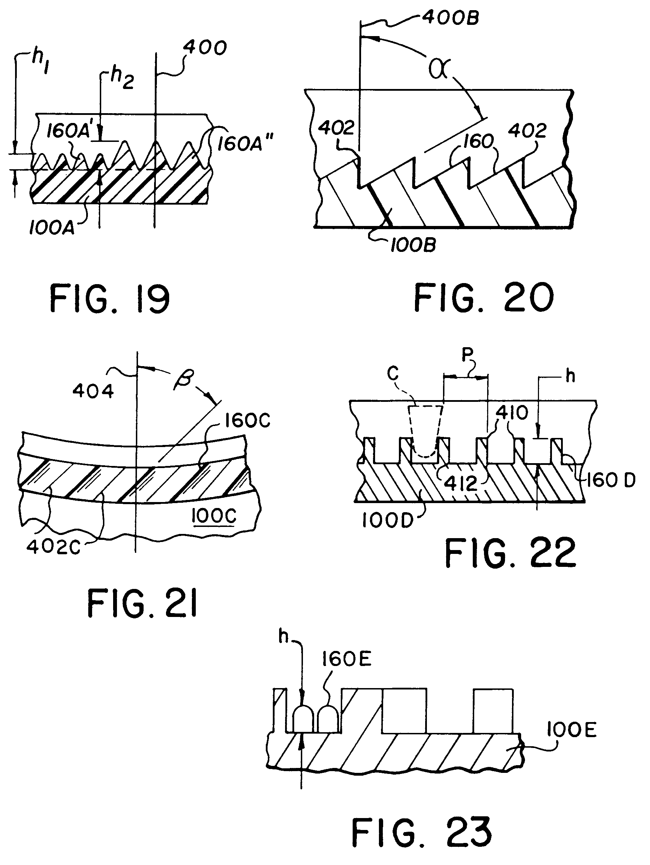

It is not essential that the mixing protrusions be precisely as shown in Figures 11 and 12. Instead they can have different configurations, as shown in Figures 19 to 22. Parts similar to those previously described bear the same reference numerals, to which the distinguishing suffixes A to D, respectively, are added. In all these, a stationary track 100A, 100B, 100C or 100D supports the ribs.

Hence, Figure 19, ribs 160A are of varying height, for example, 160A' and 160A'', depending on whether less vigorous or more vigorous mixing, respectively, is desired. For example, h₁, can be 0.6mm, and h₂ can be 3.0mm. In all cases, the ribs 160A are generally normal to track 100A, as noted by axis "400".

However, Figure 20, ribs 160B need not be normal to track 100B, but can be sawtoothed, with an angle α from the "normal" 400B which can be from 5° to 85°.

In all the previous embodiments, the ribs have a radial extension on the track -- that is, edges 402, Figure 20, of the ribs are aligned with a radius of the track, which itself is generally circular in plan view. However, such radial alignment is far from being essential. Edges 402C of ribs 160C, Figure 21, can deviate from the radial extension 404 by angle "beta" which can be from 0° to 85°, to also provide a rotational movement of the well.

In yet another embodiment, it is not necessary that the ribs have smooth surfaces with no sharp corners. Instead, Figure 22, ribs 160D have sharp exterior corners 410, and optionally sharp interior corners 412 where the ribs join track 100D. The values of "p" and "h" can be as described above.

Alternatively, the ribs need not extend all the way across their track, Figure 23. Parts similar to those previously described bear the same reference numeral to which the distinguishing suffix "E" is appended. Thus, track 100E is constructed and used in an analyzer like all the previous embodiments, except that ribs 160E are each a pair of teeth protruding upward, Figure 23, with any of the shapes, sizes "h" and pitches "p" described above. The teeth can be staggered or aligned.

Still further, there is no need for the mixing means to be fixed to a stationery track. Instead, they can be part of a rotating member which rotates against a cuvette carried by the rings above, Figure 24. Parts similar to those previously described bear the same reference numbers, to which the distinguishing suffix "F" is appended. Thus, Figure 24, the analyzer is the same as for previous embodiments, except there are no ribs fixed to a track below ring 52F or 54F (only 54F being shown). Rather, a pinion 440 having teeth 442 of judiciously-chosen shapes and sizes is driven on a shaft 444, preferably in a direction 446 which is counter to the movement 448 of ring 54F during mixing. Directions 446 and 448 can then be reversed if repeated passage of cuvette C over pinion 440 is desired.

Likewise, it is not necessary that the mixing means be mounted to project vertically up to the rings carrying the cuvettes. Instead, the protrusions can be ribs projecting from the side of the stationary track, Figures 25 and 26. Parts similar to those previously described bear the same reference numeral, to which the distinguishing suffix "G" is appended.

Thus, ring 54G carries cuvette C, Figure 25, in the same manner as in previous embodiments. However, track 100G has its ribs 160G in the form of sideways-projecting teeth, Figure 26, here shown with a sinusoidal shape as in the embodiment of Figures 11 and 12. These cause cuvette C to jerk inward and outward, arrow 450. A compliant ring 500, using biasing springs 502, Figure 26, can be used to keep cuvette C in contact with ribs 160G.

The invention disclosed herein may be practised in the absence of any element which is not specifically disclosed herein.

## Claims

1. An analyzer (10, 50) for conducting a wet assay in a liquid in a cuvette (C), the analyzer comprising:-
first station means (16) for adding a liquid reagent to a liquid in a cuvette (C),
second station means (100, 100', 150, 152, 154, 160; 100A, 160A, 160A', 160A''; 100B, 160B; 160C; 100D, 160D; 100E, 160E; 440, 442, 444; 100G, 160G, 500, 502) for mixing the reagent with the liquid already within the cuvette (C), and
station-to-station moving means (52, 54, 62, 64, 66, 68; 52F, 54F) for moving cuvettes (C) from station to station along a path;
characterized in that the second station means (100, 100', 150, 152, 154, 160; 100A, 160A, 160A', 160A''; 100B, 160B; 160C; 100D, 160D; 100E, 160E; 440, 442, 444; 100G, 160G, 500, 502) comprises at least one set of spaced-apart protrusions (160; 160A, 160A', 160A''; 160B; 160C; 160D; 160E; 442; 160G) projecting out into the path traced by the cuvettes (C),
and in that the station-to-station moving means (52, 54, 62, 64, 66, 68; 52F, 54F) provides relative motion between the protrusions (160; 160A, 160A', 160A''; 160B; 160C; 160D; 160E; 442; 160G) and each cuvette (C) so that the cuvette (C) is repeatedly disturbed by the protrusions (160; 160A, 160A', 160A''; 160B; 160C; 160D; 160E; 442; 160G) to mix the liquid contents.

2. An analyzer according to claim 1, wherein the protrusions (160; 160A, 160A', 160A''; 160B; 160C; 160D; 160E) are fixedly attached in an array under the path, and the station-to-station moving means (52, 54, 62, 64, 66, 68) operates to move cuvettes (C) over the array of protrusions (160; 160A, 160A', 160A''; 160B; 160C; 160D; 160E).

3. An analyzer according to claim 2, wherein the protrusions (160; 160A, 160A', 160A''; 160B; 160C; 160D; 160E) comprise regularly-spaced ribs of a height (h; h₁, h₂) and spacing (p; p₂) effective to cause complete mixing of the liquids without spillage.

4. An analyzer according to claim 2, wherein the protrusions (160; 160A, 160A', 160A''; 160B; 160C; 160D; 160E) comprise ribs on a fixed frame (100, 100', 150, 152, 154) only a portion of which is occupied by the ribs under the cuvette path.

5. An analyzer according to claim 3 or 4, wherein the ribs where present are of a uniform height and spacing.

6. An analyzer according to any one of claims 1 to 5, wherein the station-to-station moving means (52, 54, 62, 64, 66, 68) comprises a first annular support (52) apertured to receive and support cuvettes (C), and moving means (62, 66) for moving the first support (52) and its cuvettes (C) along a first path defined by a first annular ring, the protrusions (160; 160A, 160A', 160A''; 160B; 160C; 160D; 160E) being arranged to lie in a complimentary annular ring, portions of which are free of protrusions (160; 160A, 160A', 160A''; 160B; 160C; 160D; 160E).

7. An analyzer according to claim 6, wherein the station-to-station moving means (52, 54, 62, 64, 66, 68) further includes a second annular support (54) apertured to receive and support cuvettes (C) which is arranged to be adjacent the first annular support (52), and moving means (64, 68) for moving the second support (54) and its cuvettes (C) along a second path defined by a second annular ring, a second set of spaced-apart protrusions (160; 160A, 160A', 160A''; 160B; 160C; 160D; 160E) being provided in the second path under the second support (54) to effect mixing of the liquid contained in the cuvettes (C) carried by the second support (54).

8. An analyzer according to claim 7, wherein the second set of spaced-apart protrusions (160; 160A, 160A', 160A''; 160B; 160C; 160D; 160E) does not completely occupy the space below the second path and the space unoccupied by the second set of protrusions is functionally aligned in at least one location (80) with the portion of the first annular ring for the first set of protrusions so that a cuvette (C) can be moved at the one location (80) between the first support (52) and the second support (54) without contacting the sets of protrusions (160; 160A, 160A', 160A''; 160B; 160C; 160D; 160E).

9. An analyzer according to claim 1, wherein the protrusions (442) are mounted on a cam wheel (440, 444) which is rotated independently of the station-to-station moving means (54F).

10. An analyzer according to any one of the preceding claims, wherein the total volume to be mixed is no greater than 200ml, the protrusions (160; 160A, 160A', 160A''; 160B; 160C; 160D; 160E; 442) are arranged to impart a bump frequency to the cuvettes (C) from 20s⁻¹ to 165s⁻¹, the amplitude of the bumps, measured as the amount of vertical displacement of the bottom of the cuvettes, being between 0.6mm and 3.0mm.

11. An analyzer according to claim 1, wherein the protrusions (160G) project sideways into the path traced by the cuvettes (C) and biasing means (500, 502) are provided to bias each cuvette (C) into contact with the protrusions (160G).
